# FASCICULE DE BREVET EUROPEEN

(11) **EP 4 478 180 B1**
(45) Date de publication et mention de la délivrance du brevet: **24.12.2025**
(21) Numéro de dépôt: 24181216.3
(22) Date de dépôt: 10.06.2024
(51) Int. Cl.: G06F 8/65, G06F 8/656, G06F 11/362

(54) **PROCEDE D'APPLICATION DE CORRECTIF A DES INSTRUCTIONS DE COMPTEUR INTELLIGENT**
VERFAHREN ZUR ANWENDUNG VON KORREKTUREN AUF INTELLIGENTE ZÄHLERBEFEHLE
METHOD FOR PATCHING SMART METER INSTRUCTIONS

(30) Priorité: 12.06.2023 FR 2305920
(43) Date de publication de la demande: 18.12.2024
(73) Titulaire: SAGEMCOM ENERGY & TELECOM SAS, 92270 Bois-Colombes (FR)
(72) Inventeur: ABID, Oussama, 92270 Bois-Colombes (FR); SABRAOUI, Abbas, 92270 Bois-Colombes (FR); BASTURK, Ahmet Samed, 92270 Bois-Colombes (FR)
(74) Mandataire: Cabinet Le Guen Maillet

(56) Documents cités:
- EP-A2- 2 275 935

## Description

### DOMAINE TECHNIQUE

La présente invention concerne une application d'un correctif, à la volée, à des instructions exécutées par un compteur intelligent (« smart meter » en anglais). L'application d'un correctif permet de corriger des anomalies constatées dans les instructions exécutées par le compteur intelligent et/ou d'enrichir des opérations réalisées par exécution des instructions par le compteur intelligent.

### ETAT DE LA TECHNIQUE ANTERIEURE

De nos jours, les compteurs d'eau, de gaz, d'électricité sont devenus des compteurs intelligents, c'est-à-dire qu'ils intègrent des traitements de données et des interfaces de communication de manière à pouvoir échanger avec un serveur centralisé. Ce serveur centralisé permet notamment d'effectuer des relèves de comptage effectué par ces compteurs intelligents. Ce serveur centralisé permet aussi notamment de réaliser des mises à jour logicielles de ces compteurs intelligents, afin de corriger des anomalies constatées dans les instructions exécutées par les compteurs intelligents et/ou d'enrichir des opérations réalisées par exécution des instructions par les compteurs intelligents.

Une mise à jour logicielle (*e.g.,* FOTA (« Firmware Over-The-Air » en anglais)) est une suite d'opérations particulièrement lourde. Particulièrement, un nouveau jeu d'instructions complet (nouveau logiciel) doit être fourni à chaque compteur intelligent à mettre à jour. Une grande quantité de données doit être transmise depuis le serveur centralisé à destination de chaque compteur intelligent à mettre à jour, ce qui entraîne une grande consommation de ressources réseau. De plus, lorsque les compteurs intelligents sont des compteurs d'eau ou de gaz, ces compteurs intelligents fonctionnement sur batterie, de manière à disposer d'une alimentation énergétique autonome. Or, de telles opérations de mise à jour logicielle impactent grandement la durée de vie de la batterie.

En outre, ces mises à jour logicielles requièrent un redémarrage du compteur intelligent une fois que le nouveau jeu d'instructions est téléchargé, de sorte que ce nouveau jeu d'instructions puisse être exécuté par un processeur dudit compteur intelligent, ce qui entraîne une interruption de service.

Le document EP 2 275 935 A2 décrit une méthode de modification d'une séquence d'instructions, chaque instruction étant associée à une adresse et stockée dans une mémoire morte ROM d'une carte à puce. La méthode consiste à identifier les adresses associées aux instructions à modifier incluses dans la séquence d'instructions, puis à les stocker dans une unité de point d'arrêt. Des groupes d'instructions alternatives sont stockés dans une mémoire non volatile afin d'associer chaque groupe d'instructions à leurs adresses respectives. L'adresse courante d'une instruction courante de la séquence est comparée aux adresses identifiées, l'adresse courante correspondant à l'une des adresses identifiées, afin de permettre une mise à jour pour exécuter l'instruction courante.

Il est alors souhaitable de pallier ces inconvénients de l'état de la technique par une solution qui permette notamment d'appliquer un correctif à la volée (sans interruption de service).

### EXPOSE DE L'INVENTION

Il est proposé ici un procédé pour appliquer un correctif à un jeu d'instructions exécuté par un contrôleur d'un compteur intelligent, ledit compteur intelligent étant configuré pour communiquer avec un serveur centralisé via un réseau de communication, ledit contrôleur comportant un processeur intégrant un module de débogage configuré pour stopper l'exécution des instructions sur détection d'atteinte d'un point d'arrêt et pour générer une interruption matérielle associée, le procédé étant implémenté par ledit contrôleur et comportant les étapes suivantes : recevoir un message de nouveau correctif via ledit réseau de communication, ledit message fournissant le correctif à appliquer et un point d'arrêt d'application du correctif dans le jeu d'instructions exécuté par ledit contrôleur ; enregistrer des instructions du correctif fourni par ledit message en mémoire non-volatile, en vue d'un prochain redémarrage du compteur intelligent, ainsi qu'en mémoire vive, en vue d'une prise en compte à la volée c'est-à-dire sans redémarrer le compteur intelligent ; configurer le module de débogage avec ledit point d'arrêt d'application du correctif ; et appliquer à la volée le correctif dont les instructions sont enregistrées en mémoire vive, sur détection d'une interruption matérielle associée audit point d'arrêt d'application du correctif. Ainsi, il est possible d'appliquer, à la volée, un correctif à un jeu d'instructions exécuté par un contrôleur d'un compteur intelligent, et ce correctif sera aussi pris en compte lors d'un éventuel redémarrage ultérieur du compteur intelligent. De plus, en procédant ainsi, l'essentiel du jeu d'instructions peut rester inchangé, ce qui limite la consommation de ressources réseau pour transmettre/recevoir le correctif.

Selon un mode de réalisation particulier, le correctif est parmi les correctifs suivants : un saut d'instruction ou d'un ensemble d'instructions ; un changement d'au moins un argument de fonction ; un changement d'ordre d'exécution d'instructions ; un ajout d'au moins une instruction ; une substitution d'au moins une instruction. Ainsi, le procédé est adapté à une multitude de correctifs.

Selon un mode de réalisation particulier, le message de nouveau correctif comporte des informations qui permettent de dériver les instructions du correctif à appliquer. Ainsi, le message est de taille réduite.

Selon un mode de réalisation particulier, le correctif à appliquer est inclus dans le message de nouveau correctif sous forme d'instructions en langage machine. Ainsi, des correctifs complexes peuvent être appliqués.

Selon un mode de réalisation particulier, au démarrage du compteur intelligent, le contrôleur effectue les étapes suivantes : configurer le module de débogage avec tout point d'arrêt pour chaque correctif éventuellement reçu précédemment ; se mettre en attente de détection d'une éventuelle interruption matérielle correspondant à un dit point d'arrêt ; se mettre en attente de réception d'un éventuel message de nouveau correctif. Ainsi, chaque correctif est pris en compte au démarrage, et de nouveaux correctifs peuvent être reçus et intégrés à la volée.

Il est aussi proposé ici un programme d'ordinateur comportant des instructions de code de programme causant une implémentation du procédé, lorsque lesdites instructions sont exécutées par un processeur de compteur intelligent. Il est aussi proposé ici un support de stockage d'informations stockant de telles instructions de code de programme.

Il est aussi proposé ici un compteur intelligent configuré pour appliquer un correctif à un jeu d'instructions exécuté par un contrôleur du compteur intelligent, ledit compteur intelligent étant configuré pour communiquer avec un serveur centralisé via un réseau de communication, le contrôleur comportant un processeur intégrant un module de débogage configuré pour stopper l'exécution des instructions sur détection d'atteinte d'un point d'arrêt et pour générer une interruption matérielle associée, le contrôleur étant configuré pour : recevoir un message de nouveau correctif via une interface dudit compteur intelligent avec ledit réseau de communication, ledit message fournissant le correctif à appliquer et un point d'arrêt d'application du correctif dans le jeu d'instructions exécuté par ledit contrôleur ; enregistrer des instructions du correctif fourni par ledit message en mémoire non-volatile, en vue d'un prochain redémarrage du compteur intelligent, ainsi qu'en mémoire vive, en vue d'une prise en compte à la volée c'est-à-dire sans redémarrer le compteur intelligent ; configurer le module de débogage avec ledit point d'arrêt d'application du correctif ; et appliquer à la volée le correctif dont les instructions sont enregistrées en mémoire vive, sur détection d'une interruption matérielle associée audit point d'arrêt d'application du correctif.

### BREVE DESCRIPTION DES DESSINS

Les caractéristiques de l'invention mentionnées ci-dessus, ainsi que d'autres, apparaîtront plus clairement à la lecture de la description suivante d'au moins un exemple de réalisation, ladite description étant faite en relation avec les dessins joints, parmi lesquels :
[Fig. 1] illustre schématiquement un système de communication dans lequel la présente invention peut être implémentée ;
[Fig. 2] illustre schématiquement un algorithme d'application d'un correctif à un jeu d'instructions exécuté par un compteur intelligent du système de communication ;
[Fig. 3] illustre schématiquement un algorithme de prise en compte, à la volée, d'un correctif à appliquer à un jeu d'instructions exécuté par un compteur intelligent du système de communication ; et
[Fig. 4] illustre schématiquement un exemple d'agencement matériel d'un contrôleur de compteur intelligent du système de communication.

### EXPOSE DETAILLE DE MODES DE REALISATION

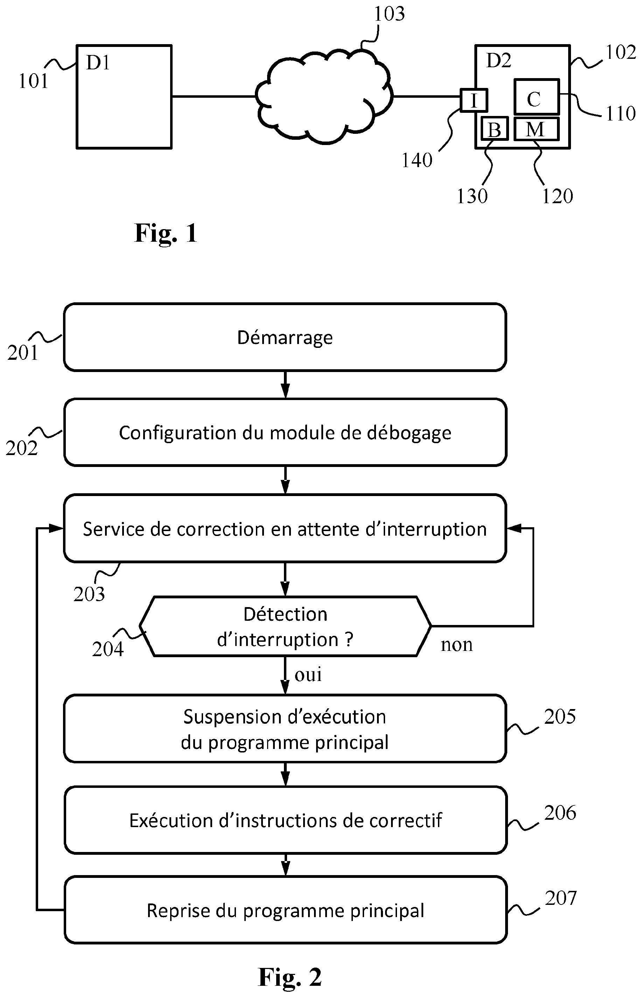

La Fig. 1 illustre schématiquement un système de communication dans lequel la présente invention peut être implémentée.

Le système de communication comprend un premier dispositif D1 101, ainsi qu'un deuxième dispositif D2 102, reliés par un réseau de communication 103.

Le deuxième dispositif D2 102 est un compteur intelligent. Par exemple, le deuxième dispositif D2 102 est un compteur d'électricité. Dans un mode de réalisation préférentiel, le deuxième dispositif D2 102 est un compteur d'eau ou de gaz.

Le premier dispositif D1 101 est adapté et configuré pour transmettre, via le réseau de communication 103, des correctifs à appliquer à un jeu d'instructions exécuté par le deuxième dispositif D2 102.

Le premier dispositif D1 101 est typiquement relié à une multitude de compteurs intelligents via le réseau de communication 103, afin de permettre d'effectuer des mises à jour logicielles desdits compteurs intelligents.

Par exemple, lorsque le deuxième dispositif D2 102 est un compteur d'électricité, le réseau de communication 103 est un réseau par courants porteurs en ligne (PLC, « PowerLine Communications » en anglais) et le premier dispositif D1 101 est un concentrateur de données (DC, « Data Concentrator » en anglais) ou un système informatique connecté à un tel concentrateur de données. Selon un autre exemple, lorsque le deuxième dispositif D2 102 est un compteur d'eau ou de gaz, le réseau de communication 103 est un réseau étendu à faible puissance (LPWAN, « Low Power Wide Area Network » en anglais), c'est-à-dire un réseau sans fil à longue portée et à basse consommation comme utilisé dans l'Internet des Objets (IoT, « Internet of Things » en anglais) et le premier dispositif D1 101 est une passerelle ou un système informatique connecté à une telle passerelle.

Pour effectuer des opérations de comptage (consommation d'eau, de gaz, d'électricité), le dispositif D2 102 comporte un module de métrologie M 120. Pour communiquer via le réseau de communication 103 et plus particulièrement avec le dispositif D1 101, le dispositif D2 102 comporte une interface de communication I 140. Pour réaliser des traitements de données, comme par exemple pour constituer des relevés de consommation à partir des opérations de comptage du module de métrologie M 120 et constituer des statistiques de consommation, le dispositif D2 102 comporte un contrôleur C 110. Lorsque le deuxième dispositif D2 102 est un compteur d'eau ou de gaz, le dispositif D2 102 comporte une batterie B 130 permettant d'alimenter électriquement le deuxième dispositif D2 102. La batterie B est typiquement calibrée pour avoir une durée de vie d'une quinzaine ou d'une vingtaine d'années. D'éventuels lourds transferts de données via l'interface de communication I peuvent nuire à cette durée de vie (bien que la batterie ait été calibrée pour en autoriser quelques-uns), ce que la présente invention vise à éviter.

La Fig. 2 illustre schématiquement un algorithme d'application d'un correctif à un jeu d'instructions exécuté par le dispositif D2 102.

Dans une étape 201, le dispositif D2 102 est mis sous tension et le dispositif D2 102 effectue un démarrage logiciel. Le contrôleur C 110 copie alors en mémoire vive des instructions stockées en mémoire non-volatile. Le contrôleur C 110 lit les instructions depuis la mémoire vive et les exécute.

Les instructions correspondent à un programme principal et éventuellement à un ou plusieurs correctifs appliqués au programme principal.

Le contrôleur C 110 inclut un processeur (par exemple de type ARM (« Advanced RISC (Reduced Instruction Set Computer) Machine » en anglais)) intégrant un module de débogage configuré pour stopper l'exécution des instructions sur détection d'atteinte d'un point d'arrêt, et pour générer une interruption matérielle associée. L'interruption matérielle est alors associée à des instructions de correctif, qui correspondent à une routine de gestion de l'interruption en question qui déroute le contrôleur C 110 vers un correctif à appliquer. Le programme principal est suspendu pour appliquer le correctif, comme détaillé ci-après.

Dans une étape 202, le dispositif D2 102 configure le module de débogage, de sorte que chaque correctif précédemment reçu par le dispositif D2 102 de la part du dispositif D1 101 soit pris en compte. Ainsi, un point d'arrêt est défini pour chaque correctif à appliquer.

Dans une étape 203, le dispositif D2 102 active son service de correction et le met en attente de détection d'une éventuelle interruption matérielle indiquant que l'exécution des instructions du programme principal a atteint un dit point d'arrêt.

Dans une étape 204, le dispositif D2 102 vérifie si une telle interruption matérielle est détectée. Si une telle interruption matérielle est détectée, cela signifie typiquement qu'un registre (appelé compteur de programme (PC, « Program Counter » en anglais)), qui pointe sur l'adresse en mémoire vive de la prochaine instruction à exécuter, a atteint ledit point d'arrêt. Une étape 205 est alors effectuée. Sinon, le service de correction reste en attente de détection d'une telle éventuelle interruption matérielle, dans l'étape 203.

Dans l'étape 205, le dispositif D2 102 suspend l'exécution du programme principal, et dans une étape 206, le dispositif D2 102 exécute les instructions du correctif associé à l'interruption matérielle détectée. La valeur du registre compteur de programme (PC) peut être utilisée pour déterminer quel correctif est concerné.

Il convient de noter que, dès lors que l'accès aux registres à usages généraux (R0, ..., Rn) est possible sous interruption, de nombreux types de correctifs peuvent être appliqués.

Selon un premier mode de réalisation, le correctif est un saut d'instruction ou d'un ensemble d'instructions (section de code). C'est le cas notamment lorsque l'instruction ou l'ensemble d'instructions en question a été identifié(e) comme inutile ou incorrect(e). A titre d'exemple : une mauvaise manipulation d'un port d'entrée-sortie de type GPIO (« General Purpose Input/Output » en anglais), ou une activation non nécessaire d'un périphérique, qui induit une surconsommation énergétique. Un correctif possible consiste alors à changer la valeur d'un registre (appelé registre de liaison (LR, « Link Register » en anglais)), qui pointe sur l'adresse en mémoire vive d'une instruction de retour de fonction, en accord avec le saut à réaliser. Un autre correctif possible est d'incrémenter la valeur du registre compteur de programme (PC), en accord avec le saut à réaliser.

Selon un deuxième mode de réalisation, le correctif est un changement d'au moins un argument de fonction. A titre d'exemple, une fonction de configuration d'un port d'entrée-sortie de type GPIO utilise un mauvais argument (*e.g*., numéro de port d'entrée-sortie de type GPIO incorrect). Un correctif possible consiste alors à changer la valeur d'un ou plusieurs registres parmi des registres à usages généraux destinés à stocker des arguments de fonction (souvent dénommés R0, ..., Rn (avec par exemple, n = 12)).

Selon un troisième mode de réalisation, le correctif est un changement d'ordre d'exécution d'instructions. A titre d'exemple, reconfigurer l'état d'un port d'entrée-sortie de type GPIO doit se faire après l'avoir initialisé et non le contraire. Un correctif possible consiste alors à lister les instructions dans le bon ordre et à changer la valeur du registre de liaison (LR) pour revenir au programme principal (étape 207) à l'instruction qui suit les instructions qui étaient mal ordonnées.

Selon un quatrième mode de réalisation, le correctif est un ajout d'au moins une instruction. A titre d'exemple : insérer une initialisation d'un port d'entrée-sortie de type GPIO qui a été omise dans le programme principal. Un correctif possible consiste alors à fournir des instructions initialisation du port d'entrée-sortie de type GPIO en question, sans changer la valeur du registre de liaison (LR).

Selon un cinquième mode de réalisation, le correctif est une substitution d'instructions. A titre d'exemple : une réécriture d'une fonction complexe, ou une introduction de nouvelles opérations dans une fonction. Les instructions du correctif sont alors reçues sous la forme d'une fonction binaire compilée, c'est-à-dire directement des instructions en langage machine. Le correctif modifie en outre la valeur du registre de liaison (LR) pour revenir au programme principal (étape 207) à l'instruction qui suit les instructions qui font l'objet de la substitution.

Ensuite, le service de correction se remet en attente de détection d'une éventuelle détection d'une interruption matérielle indiquant que l'exécution des instructions du programme principal a atteint un dit point d'arrêt, dans l'étape 203.

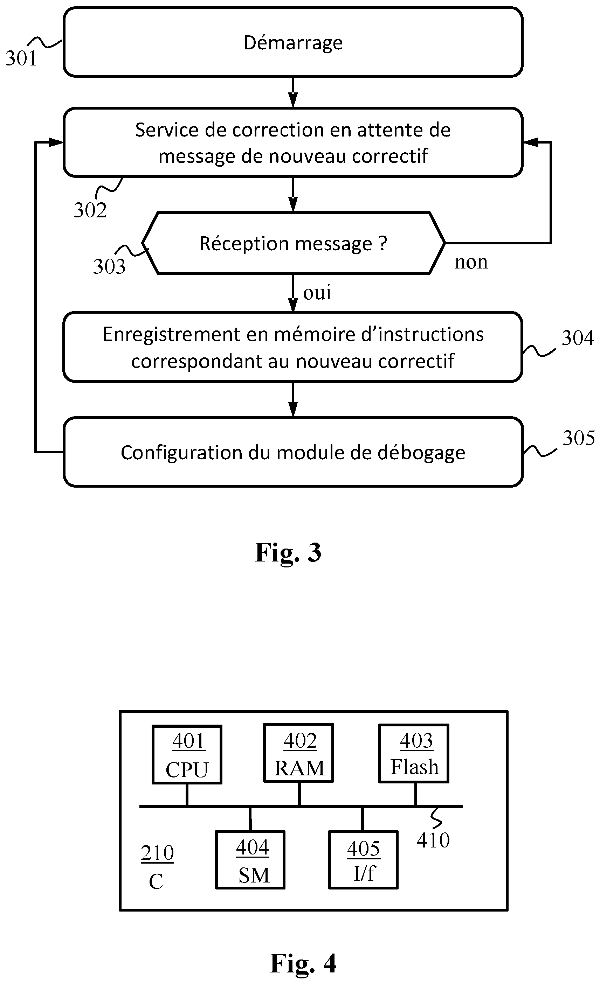

La Fig. 3 illustre schématiquement un algorithme de prise en compte, à la volée, d'un correctif à appliquer à un jeu d'instructions exécuté par le dispositif D2 102.

Dans une étape 301, le dispositif D2 102 est mis sous tension et le dispositif D2 102 effectue un démarrage logiciel. L'étape 301 est la même que l'étape 201.

Dans une étape 302, le dispositif D2 102 active son service de correction (comme à l'étape 203) et le met en attente de détection d'une éventuelle réception de message de nouveau correctif.

Le message de nouveau correctif est un message qui requiert d'appliquer un correctif au programme principal. Le message de nouveau correctif comporte une valeur de point d'arrêt concerné par le correctif à appliquer. Dans un mode de réalisation particulier, le message comporte des informations qui permettent de dériver des instructions de correctif à appliquer, comme des valeurs de registres. Cela permet d'avoir des tailles réduites (quelques octets) de messages de nouveaux correctifs, ce qui est particulièrement avantageux lorsque les transmissions depuis le dispositif D1 101 vers le dispositif D2 102 disposent d'une faible bande passante (comme c'est le cas dans les réseaux de type LPWAN). Dans un mode de réalisation particulier, le message comporte des instructions en langage machine correspondant au correctif à appliquer. Cela permet aisément de transmettre des correctifs plus complexes.

Dans une étape 303, le dispositif D2 102 vérifie si un tel message de nouveau correctif est reçu. Si tel est le cas, une étape 304 ; est effectuée ; sinon, le service de correction reste en attente de détection d'une éventuelle réception d'un tel message, dans l'étape 302.

Dans l'étape 304, le dispositif D2 102 enregistre en mémoire non volatile des instructions correspondant au nouveau correctif. Ainsi, lors d'un prochain redémarrage du dispositif D2 102, le correctif est pris en compte dans la configuration du module de débogage (étape 202). En outre, dans l'étape 304, le dispositif D2 102 enregistre en mémoire vive des instructions correspondant au nouveau correctif.

Dans une étape 305, le dispositif D2 102 configure le module de débogage, de sorte que le correctif nouvellement reçu par le dispositif D2 102 de la part du dispositif D1 101 soit pris en compte. Ainsi, un point d'arrêt est défini pour ce nouveau correctif à appliquer. L'enregistrement en mémoire vive (étape 304) des instructions correspondantes permet une mise en place à la volée du correctif, c'est-à-dire sans avoir à redémarrer le dispositif D2 102.

Ensuite, le service de correction se remet en attente de détection d'une éventuelle réception d'un message de nouveau correctif, dans l'étape 302.

La Fig. 4 illustre schématiquement un exemple d'agencement du contrôleur C 110.

Le contrôleur C 110 comporte, reliés par un bus de communication 410 : un processeur ou CPU (« Central Processing Unit » en anglais) 401 ; une mémoire vive RAM (« Random-Access Memory » en anglais) 402 ; une mémoire non volatile, par exemple de type EEPROM (« Electrically-Erasable Programmable Read Only Memory » en anglais) ou de type Flash 403 ; une unité de stockage, telle qu'un support de stockage SM 404, par exemple un disque dur HDD, ou un lecteur de support de stockage, tel qu'un lecteur de cartes SD (« Secure Digital » en anglais) ; et un gestionnaire d'interfaces I/f 405.

Le processeur ou CPU 401 intègre le module de débogage utilisé pour générer des interruptions matérielles sur des points d'arrêt préalablement définis.

Le gestionnaire d'interfaces I/f 405 permet au contrôleur C 110 d'interagir avec d'autres éléments du dispositif D2 102 (compteur intelligent), notamment le module de métrologie M 120 et l'interface de communication I 140 (pour recevoir des messages de nouveaux correctifs du dispositif D1 101)
Le processeur ou CPU 401 est capable d'exécuter des instructions chargées dans la mémoire vive 402, notamment à partir de la mémoire non volatile 303 ou du support de stockage (tel qu'une carte SD) 304, ou sur réception de message de nouveau correctif (comme décrit en relation avec la Fig. 3). Lorsque le contrôleur C 110 est mis sous tension, le processeur ou CPU 401 est ainsi capable de lire de la mémoire vive 302 des instructions et de les exécuter. Ces instructions peuvent être mises à jour à la volée par application d'un nouveau correctif, comme déjà décrit. Ces instructions forment un programme d'ordinateur causant notamment l'implémentation, par le processeur ou CPU 401, des étapes et comportements décrits ici.

## Revendications

1. Procédé pour appliquer un correctif à un jeu d'instructions exécuté par un contrôleur (110) d'un compteur intelligent (102), ledit compteur intelligent étant configuré pour communiquer avec un serveur centralisé (101) via un réseau de communication (103), ledit contrôleur (110) comportant un processeur (401) intégrant un module de débogage configuré pour stopper l'exécution des instructions sur détection d'atteinte d'un point d'arrêt et pour générer une interruption matérielle associée, le procédé étant implémenté par ledit contrôleur (110) et comportant les étapes suivantes :
- recevoir (303) un message de nouveau correctif via ledit réseau de communication, ledit message fournissant le correctif à appliquer et un point d'arrêt d'application du correctif dans le jeu d'instructions exécuté par ledit contrôleur (110) ;
- enregistrer (304) des instructions du correctif fourni par ledit message en mémoire non-volatile, en vue d'un prochain redémarrage du compteur intelligent, ainsi qu'en mémoire vive, en vue d'une prise en compte à la volée c'est-à-dire sans redémarrer le compteur intelligent ;
- configurer (305) le module de débogage avec ledit point d'arrêt d'application du correctif ; et
- appliquer (206) à la volée le correctif dont les instructions sont enregistrées en mémoire vive, sur détection d'une interruption matérielle associée audit point d'arrêt d'application du correctif.

2. Procédé selon la revendication 1, dans lequel le compteur intelligent (102) est un compteur d'eau ou de gaz, et le réseau de communication est de type LPWAN.

3. Procédé selon l'une des revendications 1 et 2, dans lequel le correctif est parmi les correctifs suivants :
- un saut d'instruction ou d'un ensemble d'instructions ;
- un changement d'au moins un argument de fonction ;
- un changement d'ordre d'exécution d'instructions ;
- un ajout d'au moins une instruction ;
- une substitution d'au moins une instruction.

4. Procédé selon l'une quelconque des revendications 1 à 3, dans lequel le message de nouveau correctif comporte des informations qui permettent de dériver les instructions du correctif à appliquer

5. Procédé selon l'une quelconque des revendications 1 à 3, dans lequel le correctif à appliquer est inclus dans le message de nouveau correctif sous forme d'instructions en langage machine.

6. Procédé selon l'une quelconque des revendications 1 à 5, dans lequel au démarrage du compteur intelligent (102), le contrôleur (110) effectue les étapes suivantes :
- configurer (202) le module de débogage avec tout point d'arrêt pour chaque correctif éventuellement reçu précédemment ;
- se mettre en attente (203) de détection d'une éventuelle interruption matérielle correspondant à un dit point d'arrêt ;
- se mettre en attente (302) de réception d'un éventuel message de nouveau correctif.

7. Produit programme d'ordinateur comportant des instructions de code de programme causant une implémentation du procédé selon l'une quelconque des revendications 1 à 6, lorsque lesdites instructions sont exécutées par un processeur (401) de compteur intelligent (102).

8. Support de stockage d'informations stockant des instructions de code de programme causant une implémentation du procédé selon l'une quelconque des revendications 1 à 6, lorsque lesdites instructions sont lues et exécutées par un processeur (401) de compteur intelligent (102).

9. Compteur intelligent (102) configuré pour appliquer un correctif à un jeu d'instructions exécuté par un contrôleur (110) du compteur intelligent (102), ledit compteur intelligent étant configuré pour communiquer avec un serveur centralisé via un réseau de communication, le contrôleur (110) comportant un processeur (401) intégrant un module de débogage configuré pour stopper l'exécution des instructions sur détection d'atteinte d'un point d'arrêt et pour générer une interruption matérielle associée, le contrôleur (110) étant configuré pour :
- recevoir (303) un message de nouveau correctif via une interface dudit compteur intelligent avec ledit réseau de communication, ledit message fournissant le correctif à appliquer et un point d'arrêt d'application du correctif dans le jeu d'instructions exécuté par ledit contrôleur (110) ;
- enregistrer (304) des instructions du correctif fourni par ledit message en mémoire non-volatile, en vue d'un prochain redémarrage du compteur intelligent, ainsi qu'en mémoire vive, en vue d'une prise en compte à la volée c'est-à-dire sans redémarrer le compteur intelligent ;
- configurer (305) le module de débogage avec ledit point d'arrêt d'application du correctif ; et
- appliquer (206) à la volée le correctif dont les instructions sont enregistrées en mémoire vive, sur détection d'une interruption matérielle associée audit point d'arrêt d'application du correctif.

10. Compteur intelligent (102) selon la revendication 9, où le compteur intelligent (102) est un compteur d'eau ou de gaz, et le réseau de communication est de type LPWAN.

## Patentansprüche

1. Verfahren zur Anwendung eines Patches auf einen Befehlssatz, der von einer Steuerung (110) eines intelligenten Zählers (102) ausgeführt wird, wobei der intelligente Zähler dazu konfiguriert ist, mit einem Zentralserver (101) über ein Kommunikationsnetz (103) zu kommunizieren, wobei die Steuerung (110) einen Prozessor (401) mit einem Debuggingmodul aufweist, das dazu konfiguriert ist, die Ausführung der Befehle bei Detektion des Erreichens eines Haltepunkts anzuhalten und eine zugeordnete Hardwareunterbrechung zu generieren, wobei das Verfahren durch die Steuerung (110) implementiert wird und die folgenden Schritte aufweist:
- Empfangen (303) einer Nachricht über einen neuen Patch über das Kommunikationsnetz, wobei die Nachricht den anzuwendenden Patch und einen Haltepunkt zur Anwendung des Patches in dem von der Steuerung (110) ausgeführten Befehlssatz bereitstellt,
- Speichern (304) der Befehle des durch die Nachricht bereitgestellten Patches im nichtflüchtigen Speicher zwecks eines nächsten Neustarts des intelligenten Zählers sowie im Arbeitsspeicher zwecks einer On-The-Fly-Berücksichtigung, das heißt ohne den intelligenten Zähler neu zu starten;
- Konfigurieren (305) des Debuggingmoduls mit dem Haltepunkt zur Anwendung des Patches; und
- Anwenden (206) des Patches, dessen Befehle im Arbeitsspeicher gespeichert sind, on-the-fly bei Detektion einer Hardwareunterbrechung, die dem Haltepunkt zur Anwendung des Patches zugeordnet ist.

2. Verfahren nach Anspruch 1, wobei der intelligente Zähler (102) ein Wasser- oder Gaszähler und das Kommunikationsnetz vom Typ LPWAN ist.

3. Verfahren nach einem der Ansprüche 1 und 2, wobei der Patch zu den folgenden Patches gehört:
- ein Überspringen eines Befehls oder einer Menge von Befehlen;
- eine Änderung wenigstens eines Funktionsarguments;
- eine Änderung einer Befehlsausführungsreihenfolge;
- eine Hinzufügung wenigstens eines Befehls;
- eine Ersetzung wenigstens eines Befehls.

4. Verfahren nach einem der Ansprüche 1 bis 3, wobei die Nachricht über einen neuen Patch Informationen beinhaltet, die es ermöglichen, die Befehle des anzuwendenden Patches abzuleiten.

5. Verfahren nach einem der Ansprüche 1 bis 3, wobei der anzuwendende Patch in der Nachricht über einen neuen Patch in Form von Befehlen in Maschinensprache enthalten ist.

6. Verfahren nach einem der Ansprüche 1 bis 5, wobei beim Start des intelligenten Zählers (102) die Steuerung (110) die folgenden Schritte durchführt:
- Konfigurieren (202) des Debuggingmoduls mit jedem Haltepunkt für jeden eventuell zuvor empfangenen Patch;
- Warten (203) auf die Detektion einer eventuellen Hardwareunterbrechung, die einem solchen Haltepunkt entspricht;
- Warten (302) auf den Empfang einer eventuellen Nachricht über einen neuen Patch.

7. Computerprogrammprodukt, das Programmcodebefehle aufweist, die eine Implementierung des Verfahrens nach einem der Ansprüche 1 bis 6 bewirken, wenn die Befehle von einem Prozessor (401) eines intelligenten Zählers (102) ausgeführt werden.

8. Informationsspeichermedium, das Programmcodebefehle speichert, die eine Implementierung des Verfahrens nach einem der Ansprüche 1 bis 6 bewirken, wenn die Befehle von einem Prozessor (401) eines intelligenten Zählers (102) gelesen und ausgeführt werden.

9. Intelligenter Zähler (102), der dazu konfiguriert ist, einen Patch auf einen Befehlssatz anzuwenden, der von einer Steuerung (110) des intelligenten Zählers (102) ausgeführt wird, wobei der intelligente Zähler dazu konfiguriert ist, mit einem Zentralserver über ein Kommunikationsnetz zu kommunizieren, wobei die Steuerung (110) einen Prozessor (401) mit einem Debuggingmodul aufweist, das dazu konfiguriert ist, die Ausführung der Befehle bei Detektion des Erreichens eines Haltepunkt anzuhalten und eine zugeordnete Hardwareunterbrechung zu generieren, wobei die Steuerung (110) für Folgendes konfiguriert ist:
- Empfangen (303) einer Nachricht über einen neuen Patch über eine Schnittstelle des intelligenten Zählers mit dem Kommunikationsnetz, wobei die Nachricht den anzuwendenden Patch und einen Haltepunkt zur Anwendung des Patches in dem von der Steuerung (110) ausgeführten Befehlssatz bereitstellt;
- Speichern (304) der Befehle des durch die Nachricht bereitgestellten Patches im nichtflüchtigen Speicher zwecks eines nächsten Neustarts des intelligenten Zählers sowie im Arbeitsspeicher zwecks einer On-The-Fly-Berücksichtigung, das heißt ohne den intelligenten Zähler neu zu starten;
- Konfigurieren (305) des Debuggingmoduls mit dem Haltepunkt zur Anwendung des Patches; und
- Anwenden (206) des Patches, dessen Befehle im Arbeitsspeicher gespeichert sind, on-the-fly bei Detektion einer Hardwareunterbrechung, die dem Haltepunkt zur Anwendung des Patches zugeordnet ist.

10. Intelligenter Zähler (102) nach Anspruch 9, wobei der intelligente Zähler (102) ein Wasser- oder Gaszähler und das Kommunikationsnetz vom Typ LPWAN ist.

## Claims

1. Method for applying a correction to a set of instructions executed by a controller (110) of a smart meter (102), said smart meter being configured to communicate with a centralised server (101) via a communication network (103), said controller (110) comprising a processor (401) incorporating a debugging module configured to stop execution of the instructions when it is detected that a stop point is reached and to generate an associated hardware interrupt, the method being implemented by said controller (110) and comprising the following steps:
- receiving (303) a new-correction message via said communication network, said message supplying the correction to be applied and a point of stopping application of the correction in the set of instructions executed by said controller (110);
- recording (304) instructions of the correction supplied by said message in non-volatile memory with a view to a future restarting of the smart meter, as well as in random access memory with a view to taking into account on the fly, i.e. without restarting the smart meter;
- configuring (305) the debugging module with said point of stopping application of the correction; and
- applying (206) on the fly the correction the instructions of which are recorded in random access memory, when a hardware interrupt associated with said point of stopping application of the correction is detected.

2. Method according to claim 1, wherein the smart meter (102) is a water or gas meter, and the communication network is of the LPWAN type .

3. Method according to one of claims 1 and 2, wherein the correction is among the following corrections:
- an instruction skip or one relating to a set of instructions;
- a change of at least one function argument;
- a change of order of executing instructions;
- an addition of at least one instruction;
- a substitution of at least one instruction.

4. Method according to any one of claims 1 to 3, wherein the new-correction message comprises information that makes it possible to derive the correction instructions to be applied.

5. Method according to any one of claims 1 to 3, wherein the correction to be applied is included in the new-correction message in the form of instructions in machine language.

6. Method according to any one of claims 1 to 5, wherein, when the smart meter (102) is started up, the controller (110) performs the following steps:
- configuring (202) the debugging module with any stop point for each correction possibly received previously;
- awaiting (203) detection of any hardware interrupt corresponding to a said stop point;
- awaiting (302) reception of any new-correction message.

7. Computer program product comprising program code instructions causing an implementation of the method according to any one of claims 1 to 6, when said instructions are executed by a processor (401) of a smart meter (102).

8. Information storage medium storing program code instructions causing an implementation of the method according to any one of claims 1 to 6, when said instructions are read and executed by a processor (401) of a smart meter (102).

9. Smart meter (102) configured to apply a correction to a set of instructions executed by a controller (110) of the smart meter (102), said smart meter being configured to communicate with a centralised server via a communication network, the controller (110) comprising a processor (401) incorporating a debugging module configured to stop execution of the instructions when it is detected that a stop point is reached and to generate an associated hardware interrupt, the controller (110) being configured for:
- receiving (303) a new-correction message via an interface of said smart meter with said communication network, said message supplying the correction to be applied and a point of stopping application of the correction in the set of instructions executed by said controller (110);
- recording (304) instructions of the correction supplied by said message in non-volatile memory with a view to a future restarting of the smart meter, as well as in random access memory with a view to taking into account on the fly, i.e. without restarting the smart meter;
- configuring (305) the debugging module with said point of stopping application of the correction; and
- applying (206) on the fly the correction the instructions of which are recorded in random access memory, when a hardware interrupt associated with said point of stopping application of the correction is detected.

10. Smart meter (102) according to claim 9, wherein the smart meter (102) is a water or gas meter, and the communication network is of the LPWAN type .
